# EUROPEAN PATENT APPLICATION

(11) **EP 4 629 028 A1**
(43) Date of publication of application: **08.10.2025**
(21) Application number: 25168312.4
(22) Date of filing: 03.04.2025
(51) Int. Cl.: G06F 1/3206, G06F 1/3209, G06F 1/324, G06F 1/3234, G06F 1/3287, G06F 1/329, G06F 9/50

(54) **DYNAMIC POWER CONTROL IN A PROCESSING UNIT**

(30) Priority: 05.04.2024 US 202418628503
(71) Applicant: Nokia Solutions and Networks Oy, 02610 Espoo (FI)
(72) Inventor: DUTTA, Pranjal Kumar, Sunnyvale, 94086 (US)
(74) Representative: Zinsinger, Norbert

(57) **Abstract**

Various example embodiments of a processing unit power control capability are presented herein. The processing unit power control capability may be configured to support dynamic power control within a processing unit that includes a set of data processing pipelines by dynamically controlling powering of the data processing pipelines. The processing unit power control capability may be configured to support dynamic power control within a processing unit that includes a set of data processing pipelines by dynamically controlling powering of the data processing pipelines based on a parameter indicative of an incoming data rate of data to the processing unit.

## Description

### TECHNICAL FIELD

Various example embodiments relate generally to computing systems and, more particularly but not exclusively, to dynamic power control in processing units of computing systems.

### BACKGROUND

Computing systems utilize various types of processing units to perform various functions in various contexts.

### SUMMARY

In at least some example embodiments, an apparatus includes a processing unit including a plurality of processor cores, wherein the processing unit is configured to support operation of the processor cores as a plurality of data processing pipelines, wherein the processing unit is configured to receive data and distribute the data to the data processing pipelines, and wherein the processing unit is configured to control powering of the data processing pipelines based on a parameter indicative of an incoming data rate of the data to the processing unit. In at least some example embodiments, to determine a value of the parameter indicative of the incoming data rate of the data to the processing unit, the processing unit is configured to count, during a data rate sampling interval, an amount of the data received at the processing unit, and compute, based on the data rate sampling interval and the amount of the data received at the processing unit, the value of the parameter indicative of the incoming data rate of the data to the processing unit. In at least some example embodiments, the processing unit is configured to power a subset of data processing pipelines, from the set of data processing pipelines, based on the parameter indicative of the incoming data rate of the data to the processing unit. In at least some example embodiments, the processing unit is configured to power a quantity of the data processing pipelines that is based on the parameter indicative of the incoming data rate of the data to the processing unit. In at least some example embodiments, the processing unit is configured to modify a quantity of the data processing pipelines receiving power based on a change in a value of the parameter indicative of the incoming data rate of the data to the processing unit. In at least some example embodiments, the processing unit is configured to power a quantity of the data processing pipelines that is based on the parameter indicative of the incoming data rate of the data to the processing unit and that is further based on respective capabilities of the respective data processing pipelines in the set of data processing pipelines. In at least some example embodiments, to control powering of the data processing pipelines, the processing unit is configured to modify an amount of power supplied to one or more of the data processing pipelines based on a change in a value of the parameter indicative of the incoming data rate of the data to the processing unit. In at least some example embodiments, the processing unit is configured to determine, based on the parameter indicative of the incoming data rate of the data to the processing unit, a quantity of the data processing pipelines to be powered, and control, based on the quantity of data processing pipelines to be powered, powering of the data processing pipelines. In at least some example embodiments, to determine the quantity of the data processing pipelines to be powered, the processing unit is configured to determine a current value of the parameter indicative of the incoming data rate of the data to the processing unit, determine, for the set of data processing pipelines, a set of capability parameters including, for each of the data processing pipelines, a respective capability parameter indicative of a capability of the respective data processing pipeline with respect to the parameter indicative of the incoming data rate of the data to the processing unit, and determine, based on the current value of the parameter indicative of the incoming data rate of the data to the processing unit and the set of capability parameters, the quantity of the data processing pipelines to be powered. In at least some example embodiments, the capability parameters indicative of the capabilities of the respective data processing pipelines include respective maximum data rates supported by the respective data processing pipelines. In at least some example embodiments, to determine the quantity of the data processing pipelines to be powered, the processing unit is configured to determine, based on the parameter indicative of the incoming data rate of the data to the processing unit, a minimum quantity of data processing pipelines to be powered, determine a buffer quantity of data processing pipelines to be powered, and determine the quantity of the data processing pipelines to be powered as a sum of the minimum quantity of data processing pipelines to be powered and the buffer quantity of data processing pipelines to be powered. In at least some example embodiments, the processing unit is configured to reduce or turn off power to one or more of the data processing pipelines based on a determination that the quantity of the data processing pipelines to be powered is less than a current quantity of the data processing pipelines powered for the processing unit. In at least some example embodiments, the processing unit is configured to increase or turn on power to one or more of the data processing pipelines based on a determination that the quantity of the data processing pipelines to be powered is greater than a current quantity of the data processing pipelines powered for the processing unit. In at least some example embodiments, the processing unit includes a monitor configured to determine the parameter indicative of the incoming data rate of the data to the processing unit, and a power controller configured to powering of the data processing pipelines based on the parameter indicative of the incoming data rate of the data to the processing unit. In at least some example embodiments, the monitor is part of a scatterer configured to direct incoming data to a set of input data queues which store the incoming data while awaiting processing by the data processing pipelines. In at least some example embodiments, the monitor is disposed between an entry point of the data to the processing unit and an element of the processing unit that is configured to direct incoming data to a set of input data queues which store the incoming data while awaiting processing by the data processing pipelines. In at least some example embodiments, the power controller is configured to determine, based on the parameter indicative of the incoming data rate of the data to the processing unit, a quantity of the data processing pipelines to be powered, and control, based on the quantity of data processing pipelines to be powered, powering of the data processing pipelines. In at least some example embodiments, the power controller is configured to control powering of the data processing pipelines based on a power management bus connecting the power controller to each of the data processing pipelines. In at least some example embodiments, the processing unit is a central processing unit (CPU), a graphics processing unit (GPU), or a network processing unit (NPU).

In at least some example embodiments, a non-transitory computer readable medium stores computer program instructions which, when executed by an apparatus, cause the apparatus to receive, at a processing unit that includes a plurality of processor cores configured to operate as a plurality of data processing pipelines, data, and control, by the processing unit based on a parameter indicative of an incoming data rate of the data to the processing unit, powering of the data processing pipelines. In at least some example embodiments, to determine a value of the parameter indicative of the incoming data rate of the data to the processing unit, the processing unit is configured to count, during a data rate sampling interval, an amount of the data received at the processing unit, and compute, based on the data rate sampling interval and the amount of the data received at the processing unit, the value of the parameter indicative of the incoming data rate of the data to the processing unit. In at least some example embodiments, the processing unit is configured to power a subset of data processing pipelines, from the set of data processing pipelines, based on the parameter indicative of the incoming data rate of the data to the processing unit. In at least some example embodiments, the processing unit is configured to power a quantity of the data processing pipelines that is based on the parameter indicative of the incoming data rate of the data to the processing unit. In at least some example embodiments, the processing unit is configured to modify a quantity of the data processing pipelines receiving power based on a change in a value of the parameter indicative of the incoming data rate of the data to the processing unit. In at least some example embodiments, the processing unit is configured to power a quantity of the data processing pipelines that is based on the parameter indicative of the incoming data rate of the data to the processing unit and that is further based on respective capabilities of the respective data processing pipelines in the set of data processing pipelines. In at least some example embodiments, to control powering of the data processing pipelines, the processing unit is configured to modify an amount of power supplied to one or more of the data processing pipelines based on a change in a value of the parameter indicative of the incoming data rate of the data to the processing unit. In at least some example embodiments, the processing unit is configured to determine, based on the parameter indicative of the incoming data rate of the data to the processing unit, a quantity of the data processing pipelines to be powered, and control, based on the quantity of data processing pipelines to be powered, powering of the data processing pipelines. In at least some example embodiments, to determine the quantity of the data processing pipelines to be powered, the processing unit is configured to determine a current value of the parameter indicative of the incoming data rate of the data to the processing unit, determine, for the set of data processing pipelines, a set of capability parameters including, for each of the data processing pipelines, a respective capability parameter indicative of a capability of the respective data processing pipeline with respect to the parameter indicative of the incoming data rate of the data to the processing unit, and determine, based on the current value of the parameter indicative of the incoming data rate of the data to the processing unit and the set of capability parameters, the quantity of the data processing pipelines to be powered. In at least some example embodiments, the capability parameters indicative of the capabilities of the respective data processing pipelines include respective maximum data rates supported by the respective data processing pipelines. In at least some example embodiments, to determine the quantity of the data processing pipelines to be powered, the processing unit is configured to determine, based on the parameter indicative of the incoming data rate of the data to the processing unit, a minimum quantity of data processing pipelines to be powered, determine a buffer quantity of data processing pipelines to be powered, and determine the quantity of the data processing pipelines to be powered as a sum of the minimum quantity of data processing pipelines to be powered and the buffer quantity of data processing pipelines to be powered. In at least some example embodiments, the processing unit is configured to reduce or turn off power to one or more of the data processing pipelines based on a determination that the quantity of the data processing pipelines to be powered is less than a current quantity of the data processing pipelines powered for the processing unit. In at least some example embodiments, the processing unit is configured to increase or turn on power to one or more of the data processing pipelines based on a determination that the quantity of the data processing pipelines to be powered is greater than a current quantity of the data processing pipelines powered for the processing unit. In at least some example embodiments, the processing unit includes a monitor configured to determine the parameter indicative of the incoming data rate of the data to the processing unit, and a power controller configured to powering of the data processing pipelines based on the parameter indicative of the incoming data rate of the data to the processing unit. In at least some example embodiments, the monitor is part of a scatterer configured to direct incoming data to a set of input data queues which store the incoming data while awaiting processing by the data processing pipelines. In at least some example embodiments, the monitor is disposed between an entry point of the data to the processing unit and an element of the processing unit that is configured to direct incoming data to a set of input data queues which store the incoming data while awaiting processing by the data processing pipelines. In at least some example embodiments, the power controller is configured to determine, based on the parameter indicative of the incoming data rate of the data to the processing unit, a quantity of the data processing pipelines to be powered, and control, based on the quantity of data processing pipelines to be powered, powering of the data processing pipelines. In at least some example embodiments, the power controller is configured to control powering of the data processing pipelines based on a power management bus connecting the power controller to each of the data processing pipelines. In at least some example embodiments, the processing unit is a central processing unit (CPU), a graphics processing unit (GPU), or a network processing unit (NPU).

In at least some example embodiments, a method includes receiving, at a processing unit that includes a plurality of processor cores configured to operate as a plurality of data processing pipelines, data, and controlling, by the processing unit based on a parameter indicative of an incoming data rate of the data to the processing unit, powering of the data processing pipelines. In at least some example embodiments, determining a value of the parameter indicative of the incoming data rate of the data to the processing unit includes counting, during a data rate sampling interval, an amount of the data received at the processing unit, and computing, based on the data rate sampling interval and the amount of the data received at the processing unit, the value of the parameter indicative of the incoming data rate of the data to the processing unit. In at least some example embodiments, the method includes powering a subset of data processing pipelines, from the set of data processing pipelines, based on the parameter indicative of the incoming data rate of the data to the processing unit. In at least some example embodiments, the quantity of the data processing pipelines that is powered is based on the parameter indicative of the incoming data rate of the data to the processing unit. In at least some example embodiments, the method includes modifying a quantity of the data processing pipelines receiving power based on a change in a value of the parameter indicative of the incoming data rate of the data to the processing unit. In at least some example embodiments, the method includes powering a quantity of the data processing pipelines based on the parameter indicative of the incoming data rate of the data to the processing unit and based on respective capabilities of the respective data processing pipelines in the set of data processing pipelines. In at least some example embodiments, controlling powering of the data processing pipelines includes modifying an amount of power supplied to one or more of the data processing pipelines based on a change in a value of the parameter indicative of the incoming data rate of the data to the processing unit. In at least some example embodiments, the method includes determining, based on the parameter indicative of the incoming data rate of the data to the processing unit, a quantity of the data processing pipelines to be powered, and controlling, based on the quantity of data processing pipelines to be powered, powering of the data processing pipelines. In at least some example embodiments, determining the quantity of the data processing pipelines to be powered includes determining a current value of the parameter indicative of the incoming data rate of the data to the processing unit, determining, for the set of data processing pipelines, a set of capability parameters including, for each of the data processing pipelines, a respective capability parameter indicative of a capability of the respective data processing pipeline with respect to the parameter indicative of the incoming data rate of the data to the processing unit, and determining, based on the current value of the parameter indicative of the incoming data rate of the data to the processing unit and the set of capability parameters, the quantity of the data processing pipelines to be powered. In at least some example embodiments, the capability parameters indicative of the capabilities of the respective data processing pipelines include respective maximum data rates supported by the respective data processing pipelines. In at least some example embodiments, determining the quantity of the data processing pipelines to be powered includes determining, based on the parameter indicative of the incoming data rate of the data to the processing unit, a minimum quantity of data processing pipelines to be powered, determining a buffer quantity of data processing pipelines to be powered, and determining the quantity of the data processing pipelines to be powered as a sum of the minimum quantity of data processing pipelines to be powered and the buffer quantity of data processing pipelines to be powered. In at least some example embodiments, the method includes reducing or turning off power to one or more of the data processing pipelines based on a determination that the quantity of the data processing pipelines to be powered is less than a current quantity of the data processing pipelines powered for the processing unit. In at least some example embodiments, the method includes increasing or turning on power to one or more of the data processing pipelines based on a determination that the quantity of the data processing pipelines to be powered is greater than a current quantity of the data processing pipelines powered for the processing unit. In at least some example embodiments, the parameter indicative of the incoming data rate of the data to the processing unit is determined by a monitor, and the powering of the data processing pipelines based on the parameter indicative of the incoming data rate of the data to the processing unit is controlled by a power controller. In at least some example embodiments, the monitor is part of a scatterer configured to direct incoming data to a set of input data queues which store the incoming data while awaiting processing by the data processing pipelines. In at least some example embodiments, the monitor is disposed between an entry point of the data to the processing unit and an element of the processing unit that is configured to direct incoming data to a set of input data queues which store the incoming data while awaiting processing by the data processing pipelines. In at least some example embodiments, the method includes determining, by the power controller based on the parameter indicative of the incoming data rate of the data to the processing unit, a quantity of the data processing pipelines to be powered, and controlling, by the power controller based on the quantity of data processing pipelines to be powered, powering of the data processing pipelines. In at least some example embodiments, the method includes controlling powering of the data processing pipelines based on a power management bus connecting the power controller to each of the data processing pipelines. In at least some example embodiments, the processing unit is a central processing unit (CPU), a graphics processing unit (GPU), or a network processing unit (NPU).

In at least some example embodiments, an apparatus includes means for receiving, at a processing unit that includes a plurality of processor cores configured to operate as a plurality of data processing pipelines, data, and means for controlling, by the processing unit based on a parameter indicative of an incoming data rate of the data to the processing unit, powering of the data processing pipelines. In at least some example embodiments, means for determining a value of the parameter indicative of the incoming data rate of the data to the processing unit includes means for counting, during a data rate sampling interval, an amount of the data received at the processing unit, and means for computing, based on the data rate sampling interval and the amount of the data received at the processing unit, the value of the parameter indicative of the incoming data rate of the data to the processing unit. In at least some example embodiments, the apparatus includes means for powering a subset of data processing pipelines, from the set of data processing pipelines, based on the parameter indicative of the incoming data rate of the data to the processing unit. In at least some example embodiments, the quantity of the data processing pipelines that is powered is based on the parameter indicative of the incoming data rate of the data to the processing unit. In at least some example embodiments, the apparatus includes means for modifying a quantity of the data processing pipelines receiving power based on a change in a value of the parameter indicative of the incoming data rate of the data to the processing unit. In at least some example embodiments, the apparatus includes means for powering a quantity of the data processing pipelines based on the parameter indicative of the incoming data rate of the data to the processing unit and based on respective capabilities of the respective data processing pipelines in the set of data processing pipelines. In at least some example embodiments, the means for controlling powering of the data processing pipelines includes means for modifying an amount of power supplied to one or more of the data processing pipelines based on a change in a value of the parameter indicative of the incoming data rate of the data to the processing unit. In at least some example embodiments, the apparatus includes means for determining, based on the parameter indicative of the incoming data rate of the data to the processing unit, a quantity of the data processing pipelines to be powered, and means for controlling, based on the quantity of data processing pipelines to be powered, powering of the data processing pipelines. In at least some example embodiments, the means for determining the quantity of the data processing pipelines to be powered includes means for determining a current value of the parameter indicative of the incoming data rate of the data to the processing unit, means for determining, for the set of data processing pipelines, a set of capability parameters including, for each of the data processing pipelines, a respective capability parameter indicative of a capability of the respective data processing pipeline with respect to the parameter indicative of the incoming data rate of the data to the processing unit, and means for determining, based on the current value of the parameter indicative of the incoming data rate of the data to the processing unit and the set of capability parameters, the quantity of the data processing pipelines to be powered. In at least some example embodiments, the capability parameters indicative of the capabilities of the respective data processing pipelines include respective maximum data rates supported by the respective data processing pipelines. In at least some example embodiments, the means for determining the quantity of the data processing pipelines to be powered includes means for determining, based on the parameter indicative of the incoming data rate of the data to the processing unit, a minimum quantity of data processing pipelines to be powered, means for determining a buffer quantity of data processing pipelines to be powered, and means for determining the quantity of the data processing pipelines to be powered as a sum of the minimum quantity of data processing pipelines to be powered and the buffer quantity of data processing pipelines to be powered. In at least some example embodiments, the apparatus includes means for reducing or turning off power to one or more of the data processing pipelines based on a determination that the quantity of the data processing pipelines to be powered is less than a current quantity of the data processing pipelines powered for the processing unit. In at least some example embodiments, the apparatus includes means for increasing or turning on power to one or more of the data processing pipelines based on a determination that the quantity of the data processing pipelines to be powered is greater than a current quantity of the data processing pipelines powered for the processing unit. In at least some example embodiments, the means for determining the parameter indicative of the incoming data rate of the data to the processing unit is a monitor, and the means for controlling powering of the data processing pipelines based on the parameter indicative of the incoming data rate of the data to the processing unit is a power controller. In at least some example embodiments, the monitor is part of a scatterer configured to direct incoming data to a set of input data queues which store the incoming data while awaiting processing by the data processing pipelines. In at least some example embodiments, the monitor is disposed between an entry point of the data to the processing unit and an element of the processing unit that is configured to direct incoming data to a set of input data queues which store the incoming data while awaiting processing by the data processing pipelines. In at least some example embodiments, the apparatus includes means for determining, by the power controller based on the parameter indicative of the incoming data rate of the data to the processing unit, a quantity of the data processing pipelines to be powered, and means for controlling, by the power controller based on the quantity of data processing pipelines to be powered, powering of the data processing pipelines. In at least some example embodiments, the apparatus includes means for controlling powering of the data processing pipelines based on a power management bus connecting the power controller to each of the data processing pipelines. In at least some example embodiments, the processing unit is a central processing unit (CPU), a graphics processing unit (GPU), or a network processing unit (NPU).

### BRIEF DESCRIPTION OF THE DRAWINGS

The teachings herein can be readily understood by considering the following detailed description in conjunction with the accompanying drawings, in which:
FIG. 1 depicts an example embodiment of a processing unit configured to support dynamic power control for data processing pipelines of the processing unit;
FIG. 2 depicts an example embodiment of a method for use by a processing unit to support dynamic power control for data processing pipelines of the processing unit based on incoming data rate;
FIG. 3 depicts an example embodiment of a method for use by a processing unit to determine an incoming data rate for use in supporting dynamic power control for data processing pipelines of the processing unit;
FIG. 4 depicts an example embodiment of a method for use by a processing unit to determine a number of data processing pipelines of the processing unit to be powered based on incoming data rate;
FIG. 5 depicts an example embodiment of a method for use by a processing unit to support dynamic power control for data processing pipelines of the processing unit based on incoming data rate; and
FIG. 6 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a processing unit power control capability are presented herein. The processing unit power control capability may be configured to support dynamic power control within a processing unit that includes a set of processor cores, configured to be operated as a set data processing pipelines, by dynamically controlling powering of the data processing pipelines. The processing unit power control capability may be configured to support dynamic power control within a processing unit that includes a set of data processing pipelines by dynamically controlling powering of the data processing pipelines based on a parameter indicative of an incoming data rate of data to the processing unit. The processing unit power control capability may be configured to support dynamic power control within a processing unit that includes a set of data processing pipelines by determining a parameter indicative of an incoming data rate of data to the processing unit and controlling powering of the data processing pipelines based on the parameter indicative of the incoming data rate of data to the processing unit. The processing unit power control capability may be configured to support dynamic power control within a processing unit that includes a set of data processing pipelines by determining the parameter indicative of the incoming data rate of data to the processing unit in various ways (e.g., based on various monitoring techniques, periodically and/or responsive to detected events, or the like, as well as various combinations thereof). The processing unit power control capability may be configured to support dynamic power control within a processing unit that includes a set of data processing pipelines by controlling the powering of the data processing pipelines in various ways (e.g., powering one or more of the data processing pipelines on and/or off, increasing and/or decreasing power to one or more of the data processing pipelines, computing a number of data processing pipelines to be powered and controlling powering of the data processing pipelines based on the number of data processing pipelines to be powered, or the like, as well as various combinations thereof). The processing unit power control capability may be configured to support dynamic power control within various types of processing units which may be used in various contexts (e.g., central processing units (CPUs), graphics processing units (GPUs), network processing units (NPUs), or the like). It will be appreciated that these and various other example embodiments of the processing unit power control capability may be further understood by way of reference to the various figures, which are discussed further below.

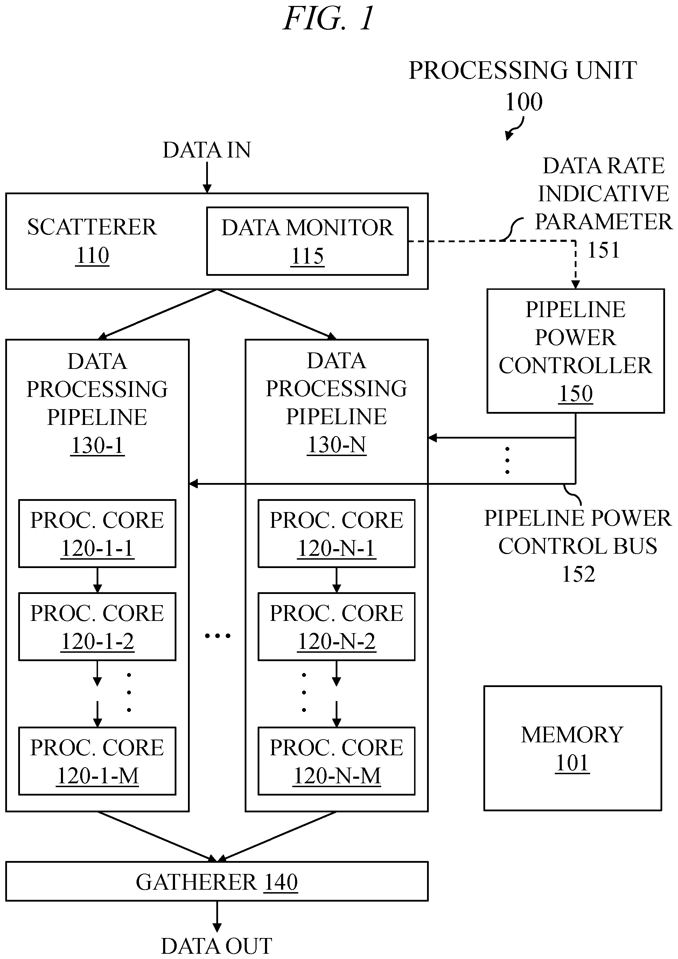

FIG. 1 depicts an example embodiment of a processing unit configured to support dynamic power control for data processing pipelines of the processing unit.

The processing unit 100 may be any multi-core processing unit configured to support operation of the processor cores in data processing pipelines. For example, the processing unit 100 may be a central processing unit (CPU), a graphics processing unit (GPU), a network processing unit (NPU), or the like. The processing unit 100 may be configured to be disposed within various types of host devices to support various applications. For example, the processing unit 100 may be configured to support various types of applications which may be supported based on general computing functions for use within various types of computing devices and/or specific computing functions for use within various types of computing devices (e.g., video rendering, video editing, extended reality, high speed network communications, medical imagery, cryptocurrency mining, or any other applications in which a processing unit may be employed to perform various types of processing functions). The processing unit 100 may include massive numbers of processor cores which may be arranged to support parallel processing functions (e.g., 1000 processor cores, 2000 processor cores, 4000 processor cores, 8000 processor cores, 64,000 processor cores, and so forth). It will be appreciated that the processing unit 100 may be implemented within various other types of devices, may be utilized to support various other types of applications, or the like, as well as various combinations thereof.

The processing unit 100 includes a memory 101, a scatterer 110 including a data monitor 115, a set of processor cores 120-1 - 120-X (collectively, processor cores 120) arranged to form a set of data processing pipelines 130-1 - 130-N (collectively, data processing pipelines 130), a gatherer 140, and a pipeline power controller 150. The memory 101 is configured to store various information for enabling the processor cores 120 of the data processing pipelines 130 to process data (e.g., program instructions for performing data processing, data to be processed, and so forth). As illustrated in FIG. 1, data entering the processing unit 100 (denoted as DATA IN) is received at the scatterer 110, the scatterer 110 distributes the data to the data processing pipelines 130, the data is processed by the processor cores 120 as the data propagates through the data processing pipelines 130, the data processing pipelines 130 output the processed data to the gatherer 140, and the processed data output by the gatherer 140 leaves the processing unit 100 (denoted as DATA OUT). It will be appreciated that, although omitted for purposes of clarity, each of the data processing pipelines 130 may have an ingress queue and egress queue associated therewith (e.g., an ingress queue arranged between the output of the scatterer 110 that goes to the data processing pipeline 130 for queuing data before it enters the data processing pipeline 130 and an egress queue arranged between the output of the data processing pipeline 130 and the input to the gatherer 140 for queuing data after it leaves the data processing pipeline). The data monitor 115 and the pipeline power controller 150, as discussed further herein, are configured to cooperate to support various aspects of various example embodiments of processing unit power control capability. It will be appreciated that the processing unit 100 may include various other elements configured to support processing of data and to support various aspects of various example embodiments of processing unit power control capability.

The processor cores 120 are arranged to form the data processing pipelines 130 such that each of the N data processing pipelines 130 includes M of the processor cores 120, i.e., a two-dimensional N x M array where N x M = X). For example, as illustrated in FIG. 1, the processor cores 120 may be arranged such that data processing pipeline 130-1 includes processor cores 120-1-1 - 120-1-M (which may be referred to collectively as processor cores 120-1 of data processing pipeline 130-1), data processing pipeline 130-2 includes processor cores 120-2-1 - 120-2-M (which may be referred to collectively as processor cores 120-2 of data processing pipeline 130-2), and so forth, with data processing pipeline 130-N including processor cores 120-N-1 - 120-N-M (which may be referred to collectively as processor cores 120-N of data processing pipeline 130-N). For example, as illustrated in FIG. 1, the processor cores 120 also may be referenced by "processing stages" in terms of where the processor cores 120 reside in the data processing pipelines 130, with the first processing stage of the data processing pipelines 130 including the processor cores 120-1-1 - 120-N-1 (which may be referred to collectively as the first stage of processor cores 120-x-1), the second processing stage of the data processing pipelines 130 including the processor cores 120-1-2 - 120-N-2 (which may be referred to collectively as the second stage of processor cores 120-x-2), and so forth, with the M-th processing stage of the data processing pipelines 130 including the processor cores 120-1-M - 120-N-M (which may be referred to collectively as the M-th stage of processor cores 120-x-M).

The data processing pipelines 130 are configured to process data in parallel such that the same set of processing functions may be applied to each data messages traversing the data processing pipelines 130. The data processing pipelines 130 may be configured such that each of the data processing pipelines 130 performs the same set of processing functions for data messages that traverse the data processing pipelines 130 (i.e., irrespective of the data processing pipeline 130 to which a given data message is directed, the data message will undergo the same processing as it traverses the processor cores 120 of the stages of processor cores 120 of the data processing pipeline 130). The data processing pipelines 130 may be configured to perform the same set of processing functions for the data messages that traverse the data processing pipelines 130 based on configuration of the processing cores 120 such that the stages of processor cores 120 perform subsets of the set of processing functions supported by the data processing pipelines 130, respectively. The data processing pipelines 130 may be configured to perform the same set of processing functions for the data messages that traverse the data processing pipelines 130 based on configuration of each of the stages of processor cores 120 such that, for a given stage of processor cores 120, each processor core 120 in the given stage of processor cores 120 performs the same set of processing functions (e.g., processor cores 120-1-1 - 120-N-1 in the first stage of processor cores 120-x-1 each perform a first set of processing functions, processor cores 120-1-2 - 120-N-2 in the second stage of processor cores 120-x-2 each perform a second set of processing functions, and so forth. In this manner, data messages may be distributed to any of the data processing pipelines 130 for processing within the processing unit 100.

The data processing pipelines 130 may be configured to process data in parallel based on parallel propagation of data messages through the data processing pipelines 130 in processing intervals. It will be appreciated that, while each processor core 120 in a particular stage of processor cores 120 across the data processing pipelines 130 may be equipped with the same set of processing functions, those processor cores 120 across the data processing pipelines 130 do not necessarily work in tandem and, thus, that the term "processing interval" is internal to any given data processing pipeline 130 (i.e., applies to a particular stage in a particular data processing pipeline 130). For example, assume that stage x (core x) in pipeline 1 is processing packet A and stage x (core x) in pipeline 2 is processing packet B. The nature of packet A and packet B is different (e.g., IPv4 vs IPv6), so stage x in each pipeline will execute a different control path in its program and, as a result, the processing time of packet A by stage x in pipeline 1 would be expected to be different from the processing time of packet B by stage x in pipeline 2. Here, the stage x in each pipeline would process independently and will pass on the packet to stage (x+1) as soon as it is done. Accordingly, it will be appreciated that references to packet processing intervals between data processing pipelines 130 may refer to processing intervals that are decoupled from each other in time.

The data processing pipelines 130 may be configured to process data in parallel based on parallel propagation of data messages through the data processing pipelines 130 in processing intervals. The data messages enter the data processing pipelines 130 at the first stage of processor cores 120-x-1, proceed through the data processing pipelines 130 core-by-core in the processing intervals while undergoing processing at each stage of processor cores 120 in the processing intervals, and exit the data processing pipelines 130 at the M-th stage of processor cores 120-x-M. For any given data processing pipeline 130-x, during a processing interval, data messages may be processed in the current stages of processor cores 120 and then propagated to the next stages of processor cores 120 for processing in the next processing interval or data messages may be moved into the current stages of processor cores 120 after processing in previous stages of processor cores 120 in a previous interval and then processed in the current stages of processor cores 120. For any given data processing pipeline 130-x, in each processing interval, an existing set of data messages for which processing completed is moved out of the data processing pipeline 130-x from the M-th stage of processor cores 120-x-M and a new set of data messages for which processing will begin is moved into the data processing pipeline 130-x at the first stage of processing cores 120-x-1. In this manner, the processing intervals ensure that the data messages are propagated through the data processing pipelines 130 for processing at the stages of processor cores 120 of the data processing pipelines 130.

The data processing pipelines 130 may be configured to propagate data messages via the data processing pipelines 130 in various ways. It will be appreciated that the manner in which the data processing pipelines 130 propagate the data messages through the data processing pipelines 130 for processing may depend on the context within which processing is performed and, thus, on the format of the data messages. For example, where the processing unit is a network processing unit configured to support processing of data packets composed of packet headers and packet payloads, the packets may be stored in the memory 101 at memory locations indexed by memory addresses and the memory addresses may be passed from processor core 120 to processor core 120 along the data processing pipelines 130, the packet payloads may be stored in the memory 101 and the packet headers may be passed from processor core 120 to processor core 120 along the data processing pipelines 130, the full data packets themselves may be passed from processor core 120 to processor core 120 along the data processing pipelines 130, or the like. More generally, the data messages may be stored in the memory 101 at memory locations indexed by memory addresses and the memory addresses may be passed from processor core 120 to processor core 120 along the data processing pipelines 130, the data messages themselves may be passed from processor core 120 to processor core 120 along the data processing pipelines 130, or the like. Accordingly, it will be appreciated that propagation of data messages through the data processing pipelines 130 may be considered to be passing of the data messages themselves, passing portions of the data messages themselves, passing of processing control over processing of the data messages, or the like, as well as various combinations thereof.

The data processing pipelines 130 may be configured to process data messages based on a program (referred to here as program X). For example, each data processing pipeline 130 may pick up the data message at the head of its input packet queue (omitted for purposes of clarity), execute program X to process the data packet, and then send out the data message (e.g., the data message or a modified version of the data message) after processing is completed. Here, the program X also may be referred to as micro-code. In each of the data processing pipelines 130, a processor core 120 of the data processing pipeline 130 executes a portion (or segment) of the instructions of the program X, i.e., a stage of the data processing pipeline 130. For example, assume that program X is segmented into M sets of program segments (denoted as X1, X2, ..., XM) corresponding to the M processor cores 120 of each of the data processing pipelines 130. It is expected that each of the cores 120 has a built-in instruction cache (IC) in which its assigned program segment is stored (where such ICs have been omitted for purposes of clarity). For example, in a given data processing pipeline 130, the first processor core 120 stores a copy of X1, the second processor core 120 stores a copy of X2, and so forth, with the M-th processor core 120 storing a copy of XM. With this arrangement, there is no contention among the processor cores 120 in accessing and executing the program segments for processing data. Additionally, when a processor core 120 performs its processing functions based on its program segment, it may need to perform one or more lookups to access reference data used for performing such processing functions. It is expected that such reference data may be stored in M external memory banks where there is a 1:1 mapping of processing stages of the data processing pipelines 130 to the M external memory banks (e.g., external memory bank 1 supports the processor cores 120-1-1 - 120-N-1 in the first stage of processor cores 120-x-1, external memory bank 2 supports the processor cores 120-1-2 - 120-N-2 in the second stage of processor cores 120-x-2, and so forth, with the M-th memory bank supporting the processor cores 120-1-M - 120-N-M in the M-th stage of processor cores 120-x-M). It is noted that the memory banks may be represented by the memory 101. With this arrangement, since each of the stages of processor cores 120 is assigned a dedicated memory bank, there is no contention that otherwise might occur if a given memory bank was accessed from multiple stages of the data processing pipelines 130; however, since each of the processor cores 120 of a given stage of processor cores 120 accesses the same memory bank, there could be contention between the processor cores 120 of a given stage of processor cores 120 to the same memory bank. In order to avoid this access contention, each of the stages of processor cores 120 may be configured such that each processor core 120 in the stage of processor cores 120 has an independent memory bus to the memory bank (i.e., each of the memory banks provides N number of access buses or "ports" and, accordingly, such memory banks may be considered to be "multi-ported" memory banks). With the arrangement of the memory 101 using memory banks configured as discussed above, each processor core 120 in each of the data processing pipelines 130 can execute its program segment in a completely contention free manner. It will be appreciated that the processor cores 120 of the data processing pipelines 130 may operate using various other memory configurations.

The data processing pipelines 130 as discussed above may be further understood by considering a case in which the processing unit 100 is a network processing unit configured for processing packets. This is described within the context of the example above in which each of the data processing pipelines 130 is configured to perform packet processing on the packets using a program referred to as program X. For example, in a given data processing pipeline 130-x, the first processor core 120-x-1 of the data processing pipeline 130-x picks up a first packet (denoted as packet Px1, where the "x" indicates the data processing pipeline and the "1" indicates the packet number) from the head of the input packet queue associated with the data processing pipeline 130-x and executes the program segment X1 to process the first packet Px1. The first processor core 120-x-1 of the data processing pipeline 130-x, after processing the first packet Px1, passes the first packet Px1 to the second processor core 120-x-2 of the data processing pipeline 130-x. The first processor core 120-x-1 of the data processing pipeline 130-x then picks up the next packet (denoted as packet Px2) from the head of the input packet queue associated with the data processing pipeline 130-x and executes the program segment X1 to process the second packet Px2. While the first processor core 120-x-1 of the data processing pipeline 130-x processes the second packet Px2, the second processor core 120-x-2 of the data processing pipeline 130-x executes program segment X2 on the first packet Px1. This cascaded processing on the first packet Px1 continues until the M-th processor core 120-x-M of the data processing pipeline 130-x executes program segment XM on the first packet Px1. So, more generally, it will be appreciated that when the M-th processor core 120-x-M of the data processing pipeline 130-x is executing the program segment XM, the first processor core 120-x-1 of the data processing pipeline 130-x may be executing the program segment X1 on the (M-1)-th packet (which may be denoted as packet Px(M-1)). In an NPU, each data processing pipeline 130 could be an ingress pipeline to process incoming packets or an egress pipeline to process outgoing packets. In the case of the ingress pipeline, the input packet queue for a data processing pipeline 130 includes the packets received from network ports, and a packet from the output of an ingress pipeline is further sent to an egress pipeline for egress processing or is sent to a CPU if the packet is to be consumed locally by the routing system (such as control protocol packets or the like). In the case of an egress pipeline, the input packet queue for a data processing pipeline 130 includes packets to be sent out of network ports after the egress processing. Since the parallel processing by the data processing pipelines 130 has reordered the incoming packets (before the packets were picked up by the scatterer 110), there may be a need to reorder the packets back into the incoming order and this reordering, when needed, is performed by the gatherer 140 which gathers the packets out of the data processing pipelines 130 and reorders them to the correct order (e.g., based on addition of sequence numbers to the packets by the scatterer 110 for use by the gatherer 140 for reordering).

The processing unit 100 is configured to support power control for controlling powering of the data processing pipelines 130 to process data traversing the data processing pipelines 130. The processing unit 100 may be configured to support power control for controlling powering of the data processing pipelines 130 by determining a parameter indicative of an incoming data rate of data to the processing unit 100 and controlling powering of the data processing pipelines 130 based on the parameter indicative of the incoming data rate of data to the processing unit 100. The processing unit 100 may be configured to support power control for controlling powering of the data processing pipelines 130 based on (1) the data monitor 115 determining the data rate indicative parameter 151 and providing the data rate indicative parameter 151 to the pipeline power controller 150 and (2) the pipeline power controller 150 receiving the data rate indicative parameter 151, determining powering of the data processing pipelines 130 based on the data rate indicative parameter 151, and controlling powering of the data processing pipelines 130 in accordance with the determined powering of the data processing pipelines 130 based on sending of power control messages via the pipeline power control bus 152. It will be appreciated that, although primarily presented with respect to a specific configuration of the processing unit 100 to support power control for controlling powering of the data processing pipelines 130 to process data traversing the data processing pipelines 130 (namely, with the data monitor 115 being implemented on the scatterer 110 and the pipeline power controller 150 controlling powering of the data processing pipelines 130 via the pipeline power control bus 152), the processing unit 100 may be configured in various other ways to support power control for controlling powering of the data processing pipelines 130 to process data traversing the data processing pipelines 130.

The data monitor 115, as indicated above, determines the data rate indicative parameter 151 and provides the data rate indicative parameter 151 to the pipeline power controller 150 for use by the pipeline power controller 150 in controlling powering of the data processing pipelines 130. The data rate indicative parameter 151 may include various parameters which may be determined in various ways. For example, data rate indicative parameter 151 may be an incoming data rate parameter (i.e., a parameter that provides a direct measure of the incoming data rate), a parameter that provides an approximation of the incoming data rate (e.g., a parameter that, although not a direct measure of the incoming data rate, changes proportionally with the incoming data), or the like. For example, data rate indicative parameter 151 is an incoming data rate parameter, the incoming data rate parameter may be determined by starting a data rate sampling interval, counting the amount of data received during the data rate sampling interval, and computing the incoming data rate at the end of the data rate sampling interval (e.g., incoming data rate = amount of data received / data rate sampling interval). It will be appreciated that the data rate indicative parameter 151 may include various types of parameters which may be computed in various ways. It will be appreciated that, although primarily presented with respect to use of a single parameter to control powering of the data processing pipelines 130, in at least some example embodiments multiple parameters may be used in combination to control the powering of the data processing pipelines 130. It will be appreciated that, although primarily presented with respect to example embodiments in which the data monitor 115 is implemented within the scattered 110, the data monitor 115 may be implemented in various other ways (e.g., in line with the scattered 110, such as at the input to the scattered 110, or in other suitable locations).

The pipeline power controller 150, as indicated above, receives the data rate indicative parameter 151 from the data monitor 115, determines powering of the data processing pipelines 130 based on the data rate indicative parameter 151, and controls powering of the data processing pipelines 130 in accordance with the determined powering of the data processing pipelines 130 based on sending of power control messages via the pipeline power control bus 152. The pipeline power controller 150 may perform the power control functions periodically (e.g., one every millisecond, once every ten milliseconds, once every tens of milliseconds, once every second, once every five seconds, once every fifteen seconds, once per minute, once per hour, or the like), in response to an event (e.g., an indication that a data burst has started, an indication that a data burst has ended, or the like), or the like, as well as various combinations thereof. The pipeline power controller 150 may generate the power control messages in various ways, send the power control messages over the pipeline power control bus 152 in various ways, or the like, as well as various combinations thereof. For example, the power control messages may be formatted and propagated via pipeline power control bus 152 in various ways, depending on granularity of power control supported by the data processing pipelines (e.g., control messages configured for turning the data processing pipelines 130 OFF and ON, control messages configured to switch the data processing pipelines 130 between states such as an IDLE state and an ON state, control messages configured to specify the specific power levels to be used by the data processing pipelines 130, or the like, as well as various combinations thereof). It will be appreciated that, although primarily presented with respect to example embodiments in which the pipeline power controller 150 is implemented as a standalone element within the processing unit 100, the pipeline power controller 150 may be implemented in various other ways (e.g., as part of one or more other controller elements of the processing unit 100).

The control over powering of the data processing pipelines 130 may be performed by determining a quantity of data processing pipelines 130 needed to support the parameter indicative of the incoming data rate, determining a quantity of data processing pipelines 130 to be powered based on the quantity of data processing pipelines 130 needed to support the parameter indicative of the incoming data rate, and controlling powering of the data processing pipelines 130 based on the quantity of data processing pipelines to be powered. The quantity of data processing pipelines 130 to be powered may be set to a value equal to the quantity of data processing pipelines 130 needed to support the parameter indicative of the incoming data rate, such that only the minimum number of data processing pipelines 130 needed to support the incoming data are powered (e.g., thereby enabling support for processing of the data at the processing unit 100 while minimizing the power consumption of the data processing pipelines 130 of the processing unit 100). The quantity of data processing pipelines 130 to be powered may be set to a value greater than the quantity of data processing pipelines 130 needed to support the parameter indicative of the incoming data rate, such that the additional data processing pipelines 130 being powered provide a buffer to enable support for processing of additional data in case the incoming data rate increases (e.g., thereby enabling data bursts to be accommodated at the processing unit 100 until the next power control cycle is executed by the processing unit 100). The control over powering of the data processing pipelines 130 based on the quantity of data processing pipelines to be powered may include powering on one or more additional data processing pipelines 130 where the quantity of data processing pipelines 130 to be powered is greater than a number of data processing pipelines 130 currently powered, powering down one or more data processing pipelines 130 where the quantity of data processing pipelines to be powered is less than a number of data processing pipelines 130 currently powered, retaining the current set of data processing pipelines 130 that is powered where the quantity of data processing pipelines to be powered is equal to a number of data processing pipelines 130 currently powered, or the like).

The control over powering of the data processing pipelines 130 may depend on the capabilities of the data processing pipelines 130 in terms of the capabilities of the data processing pipelines 130 to support data processing. More specifically, the data processing pipelines 130 may be configured to support maximum data rates and, thus, control over powering of the data processing pipelines 130 may be supported in various ways depending on capability information indicative of these maximum data rates of the data processing pipelines 130. For example, the pipeline power controller 150 may have access to information indicative of the maximum data rates of the data processing pipelines 130 and may use the maximum data rates of the data processing pipelines 130 in combination with the parameter indicative of the incoming data rate to determine the quantity of data processing pipelines 130 needed to support the parameter indicative of the incoming data rate, and, thus, the quantity of data processing pipelines 130 to be powered. For example, the quantity of data processing pipelines 130 to be powered may be determined as quantity = (incoming data rate)/(maximum pipeline data rate) + number of backup pipelines, where the number of backup pipelines enables the pipeline power controller 150 to power one or more additional data processing pipelines 130 as a buffer to handle increased data rates which may occur before the next cycle of power control is executed by the pipeline power controller 150. It will be appreciated that, although primarily presented with respect to cases in which the maximum data rates of the data processing pipelines 130 are the same across the data processing pipelines 130, different data processing pipelines 130 may be configured to support different data rates and the different data rates for the different data processing pipelines 130 may be used to determine the quantity of data processing pipelines 130 needed to support the parameter indicative of the incoming data rate, and, thus, the quantity of data processing pipelines 130 to be powered. It will be appreciated that, although primarily presented with respect to use of specific capability information for the data processing pipelines 130 to determine powering of the data processing pipelines 130, one or more other types of capability information for the data processing pipelines 130 also or alternatively may be used to determine powering of the data processing pipelines 130.

The control over powering of the data processing pipelines 130 may depend on the capabilities of the data processing pipelines 130 in terms of the capabilities of the data processing pipelines 130 to support various power levels. More specifically, the data processing pipelines 130 may be configured to support various power levels and power control capabilities and, thus, control over powering of the data processing pipelines 130 may be supported in various ways depending on capability information indicative of these various power levels and power control capabilities of the data processing pipelines. For example, the control over powering of a data processing pipeline 130 may include switching the data processing pipeline 130 between an OFF state (not powered) and an ON state (e.g., powered), switching the data processing pipeline 130 between an IDLE stage (on, but operating at the minimum supported power level) and an ON state (e.g., powered at some power level above the minimum supported power level, which may be the maximum supported power level), setting a power level of the data processing pipeline 130 to a specific power (e.g., one of multiple discrete power levels supported by the data processing pipeline 130, any suitable power level in a continuous interval of possible power levels between a minimum supported power level and a maximum supported power level supported by the data processing pipeline 130, or the like), or the like, as well as various combinations thereof. It is noted that the state of a data processing pipeline 130 also is considered to represent the state of the processor cores 120 of the data processing pipeline 130 (e.g., "powered off" means that each of the processor cores 120 is powered off and "powered on" means that each of the processor cores 120 is powered on). It is noted that, in at least some example embodiments, data processing pipelines 130 may be considered to support two states as follows: (1) a "power on" (or ON) state in which the data processing pipeline 130 (i.e., each of the processor cores 120) has sufficient power to support processing of data and (2) a "power off" (or OFF) state in which the data processing pipeline 130 (i.e., each of the processor cores 120) either has no power or is operating at some minimum possible power level (e.g., an "idle mode", a "power saving mode", or the like) where complete shutdown of power is not supported.

It will be appreciated that the control over powering of the data processing pipelines 130 may be supported in various ways.

The control over powering of the data processing pipeline 130 may be further understood by considering various aspects of powering and power control where the processing unit 100 is implemented as an NPU. An NPU generally includes a very large number of processor cores, and the number of processor cores included in NPUs continues to grow. The NPU is a key hardware component that significantly contributes to the power budget of the host system. Numerous techniques are employed to optimize NPU resources for minimal power utilization. There are two aspects in power consumed by the NPU: baseline power consumption (denoted as Pb) and dynamic power consumption (denoted as Pd). For baseline power consumption, the cores in the NPU consume baseline power even if the cores are idling (i.e., the NPU is not receiving any packets to process), and the baseline power consumption is the minimum power needed by the processor cores to remain powered up. For dynamic power consumption, the power consumption of the cores increases with the rate of the incoming packets (e.g., with the rate of incoming packets, the rate of instruction (of micro-code program) processing increases, which in turn increases the power consumption), and power consumption peaks when the NPU is receiving packets at its peak capacity. The total power consumed by an NPU at any given time is given by P = Pb+ Pd, where Pb is constant and Pd varies with rate (R) of incoming packets to NPU. In other words, power differential over incoming packet rate R is given by dP/dR = dPd/dR. When an NPU is underutilized (not receiving packets at sufficient percentage of the capacity of the NPU), Pd goes lower. Below a certain packet rate threshold (denoted as Rmin), Pd becomes less than Pb (Pb > Pd) and Pb becomes the dominant component contributing to power consumption of NPU. Basically, when R < Rmin, dP/dR becomes 0. For example, consider the case of an NPU where Pb is 50% and Pd varies from 0% (when R is 0%) to 50% (when R is 100%). In this example, assume when R is 30%, Pd becomes 20%, and the overall power consumption P is 70% and Pb contributes to 50% share. From this description and the associated example, a couple of points become apparent. First, when R < Rmin, it becomes necessary to dynamically reduce Pb as well so that dP/dR = dPb/dR. Second, it would add more value if Pb can be also varied in a controlled manner even if the packet rate is above Rmin (i.e., irrespective of whether Pb is a dominant component or not) or, in other words, if Pb is also varied controllably with incoming packet rate such that dP/dR = dPb/dR + dPd/dR. Various example embodiments presented herein are configured to support dynamic varying baseline power consumption (Pb) during operation of the NPU.

The control over powering of the data processing pipeline 130 where the processing unit 100 is implemented as an NPU may be performed as follows. Since all incoming packets pass through a scatterer, a packet rate monitor (PRM) may be included within the scatterer to monitor the incoming packet rate and periodically provide the incoming packet rate information to a centralized pipeline power controller (PPC). The PPC is connected to each pipeline through a power management bus. The power management bus allows the PPC to efficiently power on or power off a subset of pipelines. The PPC is also hardcoded or programmed with the static information about maximum/optimal packet rate supported by a pipeline. The PPC, based on the incoming packet rate information received from PRM and the maximum / optimal packet rate supported by a pipeline, can determine the number of pipelines Y needed to sustain the incoming packet rate. For example, one way to compute Y is as Y = (incoming packet rate)/(maximum packet rate supported by a pipeline) + number of backup pipelines, where a number of backup pipelines may be added as a buffer so that the pipelines are not pushed to their capacity. Then, a subset of (N-Y) pipelines are completely powered off, where N is the total number of pipelines in the NPU. If baseline power consumption per pipeline is Pbp then Pb reduces by (M-Y)xPbp. As a result, the Pb component is also dynamically controlled based on incoming packet rate, which fulfills the requirement dP/dR = dPb/dR + dPd/dR. For example, assume that each pipeline can support up to Q packets per second. So, the maximum packet processing rate (Rmax ) of the NPU is QxN, where N is the total number of pipelines in the NPU. If the PPC finds that incoming packet rate S is sufficiently less than QxN, then it can power off (N-Y) number pipelines. In that case YxQ ≥ S, i.e., the remaining Y pipelines are sufficient enough to process the incoming packet rate of S. It will be appreciated that "sufficient enough" may be a condition to be determined based on maximum allowed acceleration of packet rate and time taken to power on pipelines necessary to handle the acceleration (and some extra leeway (one or more extra pipelines) may be intentionally provided).

It will be appreciated that the processing unit 100 may be configured to support various other functions for controlling powering of data processing pipelines to support processing of data at the processing unit.

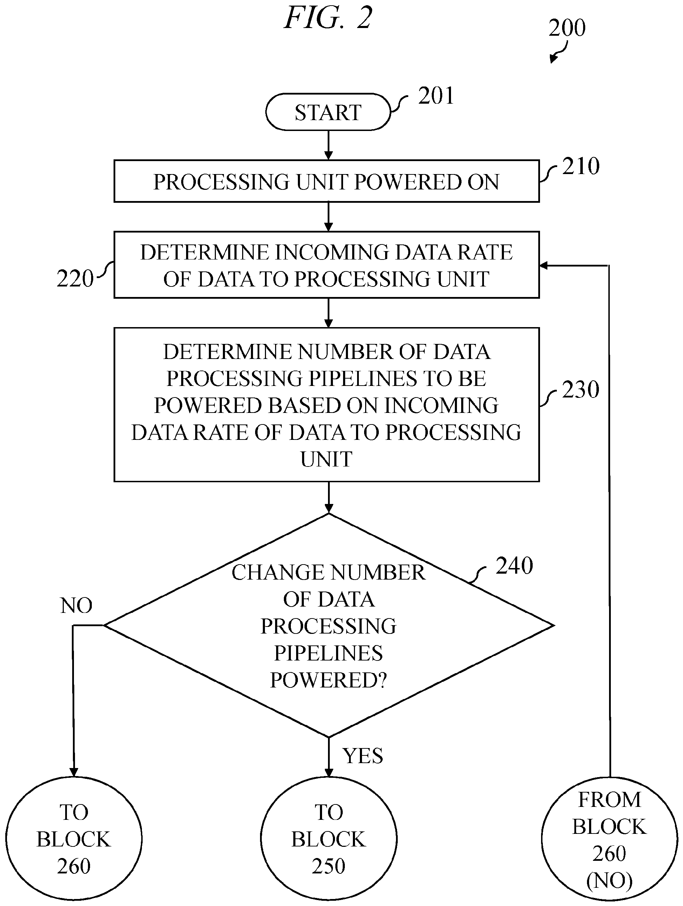

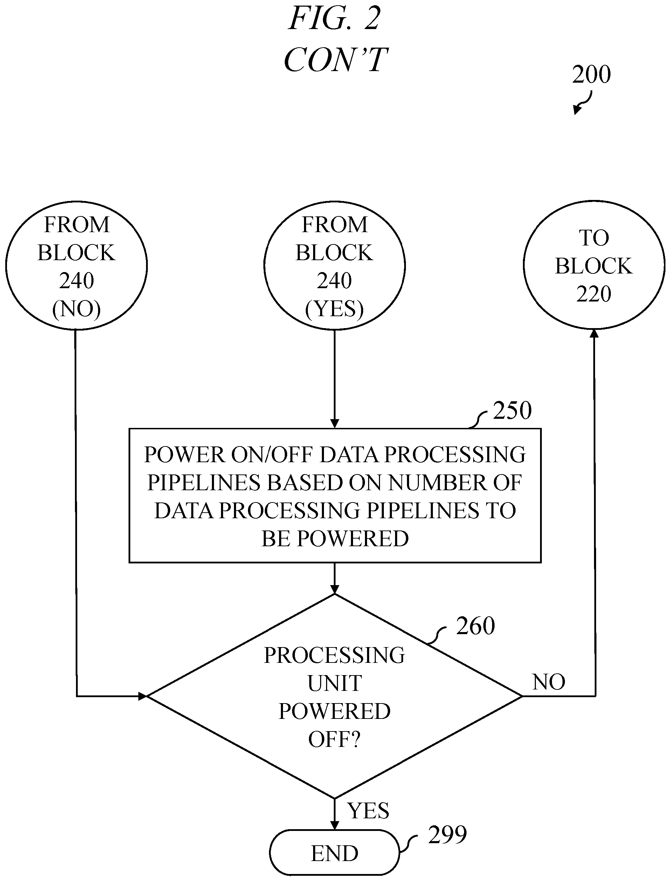

FIG. 2 depicts an example embodiment of a method for use by a processing unit to support dynamic power control for data processing pipelines of the processing unit based on incoming data rate. It will be appreciated that, although primarily presented herein as being performed serially, at least a portion of the functions of method 200 may be performed contemporaneously or in a different order than as presented in FIG. 2.

### At block 201, the method 200 begins.

At block 210, the processing unit is powered on. The processing unit begins receiving data. For example, the data may be in the form of data messages or data units where the processing unit is a CPU or GPU, data packets where the processing unit is an NPU, or the like.

It will be appreciated that other forms of data may be received by the processing unit for processing.

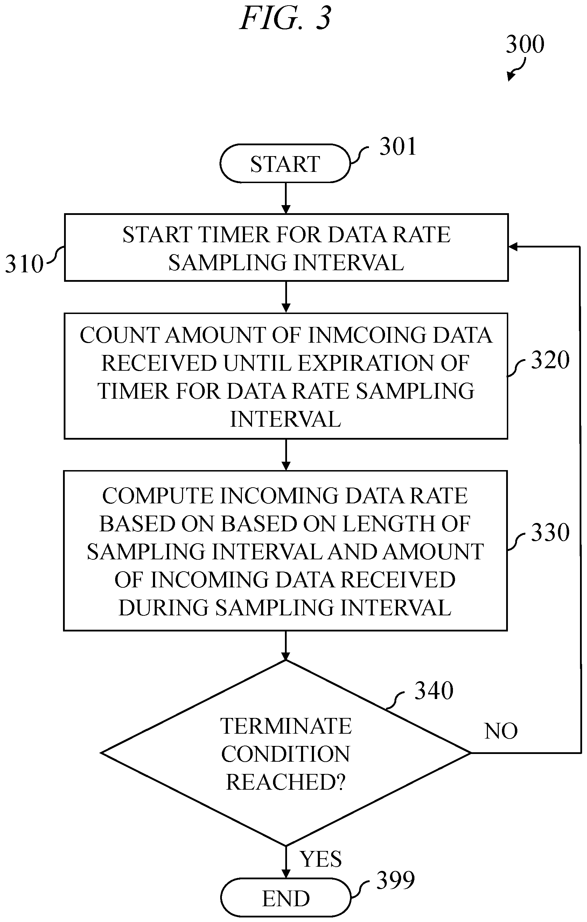

At block 220, the processing unit determines the incoming data rate to the processing unit. For example, the incoming data rate may be an incoming data message rate or incoming data unit rate where the processing unit is a CPU or GPU, an incoming packet rate where the processing unit is an NPU, or the like. An example embodiment of a method for use by the processing unit to determine the incoming data rate is presented with respect to FIG. 3.

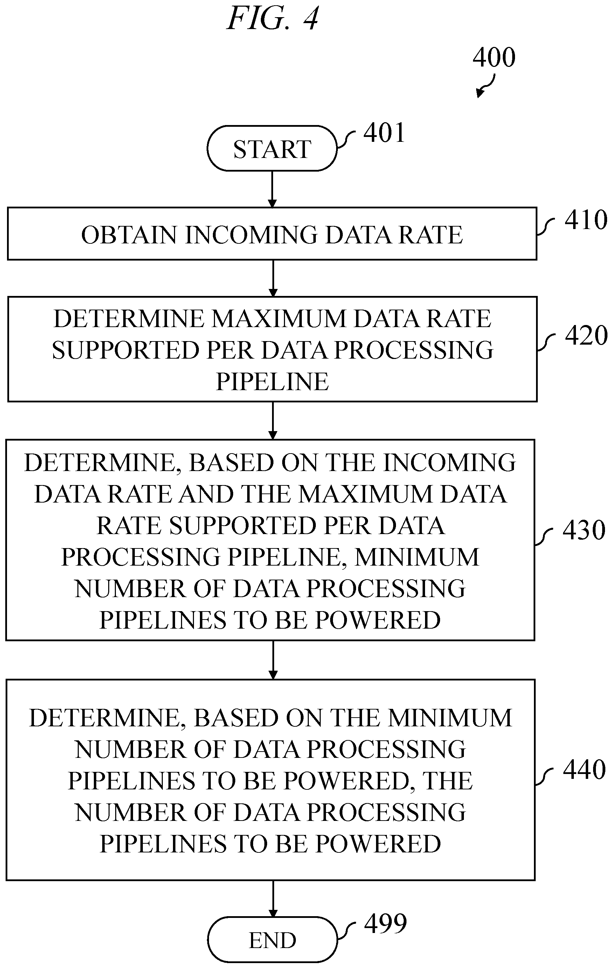

At block 230, the processing unit determines the number of data processing pipelines to be powered to sustain the incoming data rate. The processing unit may determine the number of data processing pipelines based on data processing capabilities of the data processing pipelines of the processing unit. An example embodiment of a method for use by the processing unit to determine the number of data processing pipelines to be powered to sustain the incoming data rate is presented with respect to FIG. 4.

At block 240, the processing unit determines whether the number of data processing pipelines powered for the processing unit needs to be changed. For example, the processing unit, to determine whether the number of data processing pipelines powered for the processing unit needs to be changed, may determine whether the number of data processing pipelines currently powered for the processing unit is equal to the number of data processing pipelines to be powered to sustain the incoming data rate. If the number of data processing pipelines currently powered for the processing unit is not equal to the number of data processing pipelines to be powered to sustain the incoming data rate, then the method 200 proceeds to block 250, otherwise the method 200 proceeds to block 260.

At block 250, the processing unit, based on a determination that the number of data processing pipelines currently powered for the processing unit is not equal to the number of data processing pipelines to be powered to sustain the incoming data rate, modifies the powering of the data processing pipelines. If more data processing pipelines are needed to handle the incoming data rate then the processing unit may power one or more additional data processing pipelines (e.g., powering one or more pipelines from an off state to an on state, changing one or more pipelines from an idle state to an on state, increasing an amount of power to one or more of the pipelines, or the like, as well as various combinations thereof). If fewer data processing pipelines are needed to handle the incoming data rate then the processing unit may power one or more fewer data processing pipelines (e.g., powering one or more pipelines from an on state to an off state, changing one or more pipelines from an on state to an idle state, decreasing an amount of power to one or more of the pipelines, or the like, as well as various combinations thereof).

At block 260, the processing unit, based on a determination that the proper number of data processing pipelines is powered to handle the incoming data rate (whether the proper number was already powered without adjustments by the processing unit or the number powered was adjusted based on the incoming data rate), a determination is made as to whether the processing unit is being powered off. If the processing unit is not being powered off, then the method 200 returns to block 220 so that the processing unit can continue to dynamically control powering of the data processing pipelines in accordance with the incoming data rate to the processing unit. If the processing unit is being powered off, then the method 200 proceeds to block 299, where the method 200 ends.

### At block 299, the method 200 ends.

FIG. 3 depicts an example embodiment of a method for use by a processing unit to determine an incoming data rate for use in supporting dynamic power control for data processing pipelines of the processing unit. It will be appreciated that, although primarily presented herein as being performed serially, at least a portion of the functions of method 300 may be performed contemporaneously or in a different order than as presented in FIG. 3.

### At block 301, the method 300 begins.

At block 310, a timer for a data rate sampling interval is started. The data rate sampling interval may include any interval suitable for use in obtaining an accurate measure of the incoming data rate.

At block 320, the amount of incoming data is counted until the expiration of the timer for the data rate sampling interval. It will be appreciated that the manner in which the amount of incoming data is counted may depend on the type of data being counted (e.g., counting a total number of bits in data messages or data units where the processing unit is a CPU or GPU, a total number of bits in data packets where the processing unit is an NPU, or the like).

At block 330, the incoming data rate is computed based on the length of the sampling interval and the amount of incoming data received during the sampling interval. For example, the incoming data rate may be computed as (amount of incoming data / sampling interval).

At block 340, a determination is made as to whether a terminate condition has been reached. For example, the terminate condition may be deactivation of the power control feature, initiation of a process for powering down the network unit, or the like. If a terminate condition has not been reached, then the method 300 returns to block 310 to begin the next data rate sampling interval. If a terminate condition has been reached, then the method 300 proceeds to block 399 where the method 300 ends.

### At block 399, the method 300 ends.

FIG. 4 depicts an example embodiment of a method for use by a processing unit to determine a number of data processing pipelines of the processing unit to be powered based on incoming data rate. It will be appreciated that the method 400 of FIG. 4 may be used to provide block 230 of FIG. 2. It will be appreciated that, although primarily presented herein as being performed serially, at least a portion of the functions of method 400 may be performed contemporaneously or in a different order than as presented in FIG. 4.

### At block 401, the method 400 begins.

At block 410, the processing unit obtains the incoming data rate of data received at the processing unit. The processing unit may obtain the incoming data rate from any suitable element of the processing unit configured to maintain this type of information (e.g. an element that determines the incoming data rate of the data received at the processing unit, an element that receiving an indication of the incoming data rate of the data received at the processing unit from an element that determines the incoming data rate of the data received at the processing unit, or the like).

At block 420, the processing unit determines the maximum data rate supported per data processing pipeline. The processing unit may determine the maximum data rate supported per data processing pipeline based on data processing pipeline capability information available on the processing unit or otherwise available to the processing unit. The processing unit may determine the maximum data rate supported per data processing pipeline from any suitable element of the processing unit configured to maintain this type of information. It will be appreciated that the maximum supported data rate may be the same for each of the data processing pipelines or may vary across the data processing pipelines.

At block 430, the processing unit determines, based on the incoming data rate and the maximum data rate supported per data processing pipeline, a minimum number of data processing pipelines to be powered. The minimum number of data processing pipelines to be powered represents the minimum number of data processing pipelines that need to be powered, based on the capabilities of the data processing pipelines, in order to sustain the incoming data rate.

At block 440, the processing unit determines, based on the minimum number of data processing pipelines to be powered, the number of data processing pipelines to be powered. The processing unit may set the number of data processing pipelines to be powered equal to the minimum number of data processing pipelines to be powered (e.g., the processing unit may choose to conserve power by powering only the minimum number of data processing pipelines needed to sustain the incoming data rate) or may set the number of data processing pipelines to be powered to a value greater than the minimum number of data processing pipelines to be powered (e.g., the processing unit may choose to power one or more additional data processing pipelines, in addition to the minimum number of data processing pipelines to be powered, to provide additional processing capacity to handle a potential surge of incoming data that might be received at the processing unit before the next cycle of dynamic power management is performed).

### At block 499, the method 400 ends.

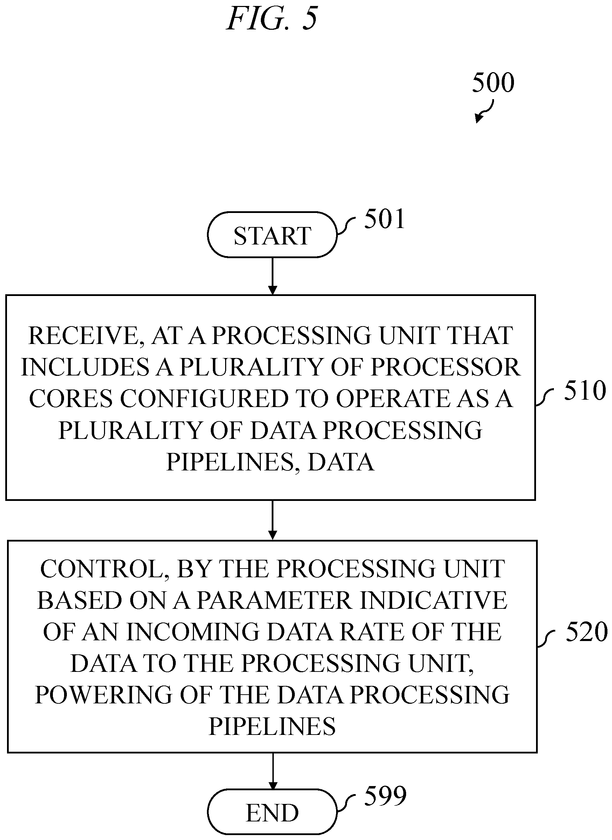

FIG. 5 depicts an example embodiment of a method for use by a processing unit to support dynamic power control for data processing pipelines of the processing unit based on incoming data rate. It will be appreciated that, although primarily presented herein as being performed serially, at least a portion of the functions of method 500 may be performed contemporaneously or in a different order than as presented in FIG. 5.

### At block 501, the method 500 begins.

At block 510, receive, at a processing unit that includes a plurality of processor cores configured to operate as a plurality of data processing pipelines, data.

At block 520, control, by the processing unit based on a parameter indicative of an incoming data rate of the data to the processing unit, powering of the data processing pipelines.

### At block 599, the method 500 ends.

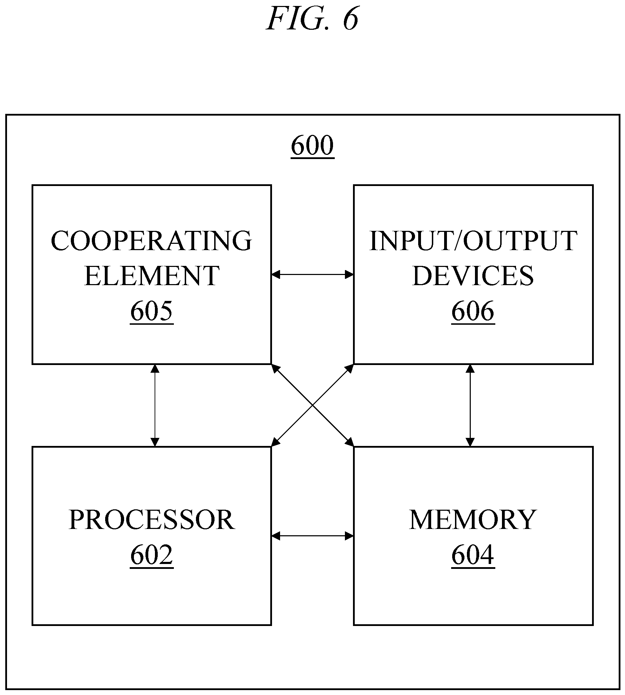

FIG. 6 depicts an example embodiment of a computer suitable for use in performing various functions presented herein.

The computer 600 includes a processing unit 602 (e.g., a central processing unit (CPU), a graphics processing unit (GPU), a network processing unit (NPU), or the like) and a memory 604 (e.g., a random access memory (RAM), a read-only memory (ROM), or the like). In at least some example embodiments, the computer 600 may include at least one processor (e.g., processor 602) and at least one memory (e.g., memory 604) storing instructions that, when executed by the at least one processor, cause the computer to perform various functions presented herein.

The computer 600 also may include a cooperating element 605. The cooperating element 605 may be a hardware device. The cooperating element 605 may be a process that can be loaded into the memory 604 and executed by the processing unit 602 to implement various functions presented herein (in which case, for example, the cooperating element 605 (including associated data structures) can be stored on a non-transitory computer readable medium, such as a storage device or other suitable type of storage element (e.g., a magnetic drive, an optical drive, or the like)).

The computer 600 also may include one or more input/output devices 606. The input/output devices 606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 600 may represent a general architecture and functionality suitable for implementing functional elements described herein, portions of functional elements described herein, or the like, as well as various combinations thereof. For example, computer 600 may provide a general architecture and functionality that is suitable for implementing one or more elements presented herein, such as an apparatus including a processing unit as presented herein.

It will be appreciated that at least some of the functions presented herein may be implemented in software (e.g., via implementation of software on one or more processing units and/or processor cores, for executing on a general purpose computer (e.g., via execution by one or more processing units and/or processor cores) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processing unit to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a processing unit including a plurality of processor cores, wherein the processing unit is configured to support operation of the processor cores as a plurality of data processing pipelines;
wherein the processing unit is configured to receive data and distribute the data to the data processing pipelines; and
wherein the processing unit is configured to control powering of the data processing pipelines based on a parameter indicative of an incoming data rate of the data to the processing unit.

2. The apparatus according to claim 1, wherein, to determine a value of the parameter indicative of the incoming data rate of the data to the processing unit, the processing unit is configured to:
count, during a data rate sampling interval, an amount of the data received at the processing unit; and
compute, based on the data rate sampling interval and the amount of the data received at the processing unit, the value of the parameter indicative of the incoming data rate of the data to the processing unit.

3. The apparatus according to any of claims 1 to 2, wherein the processing unit is configured to power a subset of data processing pipelines, from the set of data processing pipelines, based on the parameter indicative of the incoming data rate of the data to the processing unit.

4. The apparatus according to any of claims 1 to 3, wherein the processing unit is configured to power a quantity of the data processing pipelines that is based on the parameter indicative of the incoming data rate of the data to the processing unit.

5. The apparatus according to any of claims 1 to 4, wherein the processing unit is configured to modify a quantity of the data processing pipelines receiving power based on a change in a value of the parameter indicative of the incoming data rate of the data to the processing unit.

6. The apparatus according to any of claims 1 to 5, wherein the processing unit is configured to power a quantity of the data processing pipelines that is based on the parameter indicative of the incoming data rate of the data to the processing unit and that is further based on respective capabilities of the respective data processing pipelines in the set of data processing pipelines.

7. The apparatus according to any of claims 1 to 6, wherein, to control powering of the data processing pipelines, the processing unit is configured to:
modify an amount of power supplied to one or more of the data processing pipelines based on a change in a value of the parameter indicative of the incoming data rate of the data to the processing unit.

8. The apparatus according to any of claims 1 to 7, wherein the processing unit is configured to:
determine, based on the parameter indicative of the incoming data rate of the data to the processing unit, a quantity of the data processing pipelines to be powered; and
control, based on the quantity of data processing pipelines to be powered, powering of the data processing pipelines.

9. The apparatus according to claim 8, wherein, to determine the quantity of the data processing pipelines to be powered, the processing unit is configured to:
determine a current value of the parameter indicative of the incoming data rate of the data to the processing unit;
determine, for the set of data processing pipelines, a set of capability parameters including, for each of the data processing pipelines, a respective capability parameter indicative of a capability of the respective data processing pipeline with respect to the parameter indicative of the incoming data rate of the data to the processing unit; and
determine, based on the current value of the parameter indicative of the incoming data rate of the data to the processing unit and the set of capability parameters, the quantity of the data processing pipelines to be powered.

10. The apparatus according to claim 9, wherein the capability parameters indicative of the capabilities of the respective data processing pipelines include respective maximum data rates supported by the respective data processing pipelines.

11. The apparatus according to claim 8, wherein, to determine the quantity of the data processing pipelines to be powered, the processing unit is configured to:
determine, based on the parameter indicative of the incoming data rate of the data to the processing unit, a minimum quantity of data processing pipelines to be powered;
determine a buffer quantity of data processing pipelines to be powered; and
determine the quantity of the data processing pipelines to be powered as a sum of the minimum quantity of data processing pipelines to be powered and the buffer quantity of data processing pipelines to be powered.

12. The apparatus according to claim 8, wherein the processing unit is configured to at least one of:
reduce or turn off power to one or more of the data processing pipelines based on a determination that the quantity of the data processing pipelines to be powered is less than a current quantity of the data processing pipelines powered for the processing unit; or
increase or turn on power to one or more of the data processing pipelines based on a determination that the quantity of the data processing pipelines to be powered is greater than a current quantity of the data processing pipelines powered for the processing unit.

13. The apparatus according to any of claims 1 to 13, wherein the processing unit includes:
a monitor configured to determine the parameter indicative of the incoming data rate of the data to the processing unit; and
a power controller configured to control powering of the data processing pipelines based on the parameter indicative of the incoming data rate of the data to the processing unit.

14. A non-transitory computer-readable medium storing computer program instructions which, when executed by an apparatus, cause the apparatus to:
receive, at a processing unit that includes a plurality of processor cores configured to operate as a plurality of data processing pipelines, data; and
control, by the processing unit based on a parameter indicative of an incoming data rate of the data to the processing unit, powering of the data processing pipelines.

15. A method, comprising:
receiving, at a processing unit that includes a plurality of processor cores configured to operate as a plurality of data processing pipelines, data; and
controlling, by the processing unit based on a parameter indicative of an incoming data rate of the data to the processing unit, powering of the data processing pipelines.
